# EUROPÄISCHE PATENTSCHRIFT

(11) **EP 1 300 431 B1**
(45) Veröffentlichungstag und Bekanntmachung des Hinweises auf die Patenterteilung: **08.12.2004**
(21) Anmeldenummer: 02021842.6
(22) Anmeldetag: 27.09.2002
(51) Int. Cl.: C08G 63/64, C08L 69/00, C08G 63/78, C08G 63/79

(54) **Verfahren zur Herstellung von Polyestercarbonaten**
Process for the preparation of polyestercarbonates
Procédé pour la préparation de polyestercarbonates

(30) Priorität: 05.10.2001 DE 10149042
(43) Veröffentlichungstag der Anmeldung: 09.04.2003
(73) Patentinhaber: Bayer MaterialScience AG, 51368 Leverkusen (DE)
(72) Erfinder: Kratschmer, Silke, Dr., 47829 Krefeld (DE); Alewelt, Wolfgang, Dr., 47809 Krefeld (DE); Bruder, Friedrich-Karl, Dr., 47802 Krefeld (DE); Haese, Wilfried, Dr., 51519 Odenthal (DE); Wehrmann, Rolf, Dr., 47800 Krefeld (DE); Fischer, Peter, Dr., 50676 Köln (DE); Roelofs, Marco, 47807 Krefeld (DE); Bunzel, Lothar, 47906 Kempen (DE)

(56) Entgegenhaltungen:
- EP-A- 0 216 106
- EP-A- 0 926 177
- WO-A-00/26275
- US-B1- 6 232 429

## Beschreibung

Die Anmeldung betrifft ein Zwei-Stufen-Verfahren zur Herstellung von Polyestercarbonaten mit aliphatischen Dicarbonsäuren, sowie die erhältlichen Polyestercarbonate selbst sowie die Verwendung dieses Polyestercarbonats zur Herstellung von Extrudaten und Formkörpern aus diesen Polyestercarbonaten und diese Extrudate und Formkörper selbst.

Das Umesterungsverfahren ist für den Einbau von aromatischen Dicarbonsäuren wohlbekannt und z.B. in US-A 4 459 384 beschrieben. Der Einbau von aliphatischen Dicarbonsäuren wird in JP-A 2000 248 057 beschrieben.

Die Herstellung von Polyestercarbonaten aus difunktionellen, aliphatischen Carbonsäuren und Dihydroxyverbindungen über das Phasengrenzflächenverfahren ist beispielsweise in EP-A 433 716, US-A 4 983 706 und US-A 5 274 068 beschrieben. Wie die EP-A 433 716 lehrt, lassen sich die für Polyestercarbonate bekannten Carbonsäuren im Phasengrenzflächenverfahren jedoch nur durch eine aufwendige, pH-kontrollierte Fahrweise in signifikanten Mengen einbauen.

Zusätzlich enthalten Polyestercarbonate, die durch das Phasengrenzflächenverfahren hergestellt werden, zu geringen Anteilen Anhydride der eingesetzten Dicarbonsäuren bzw. noch freie Säure, was unerwünscht ist. Dies ist in EP-A 926 177 beschrieben. Es ist jedoch grundsätzlich das Ziel, die Dicarbonsäuren so vollständig wie möglich in das Polyestercarbonat einzubauen, so dass im Produkt möglichst viel Esterbindungen neben wenig Säure- oder Anhydridstrukturen vorliegen, da diese die Stabilität des Polyestercarbonats beeinträchtigen.

Im Gegensatz zum aufwendigen Phasengrenzflächenverfahren können Polyestercarbonate nach dem Umesterungsverfahren deutlich einfacher synthetisiert werden. Sie enthalten kaum Anhydridstrukturen, wie in der DE-Anmeldung Nr. 10131127.3 beschrieben, zeigen jedoch üblicherweise eine stärkere Eigenfärbung, welche ihre Eignung für die meisten Anwendungen stark beeinträchtigt.

Die Aufgabe bestand demnach darin, ein Verfahren zur Herstellung eines Polyestercarbonats bereitzustellen, das einerseits ohne eine stets aufwendige pH-Kontrolle auskommt, andererseits aber dennoch eine gute Eigenfarbe und geringe Anhydridstrukturen aufweist.

Die Aufgabe wurde überraschenderweise durch das erfindungsgemäße kombinierte Umesterungs- und Phasengrenzflächenverfahren gelöst.

Gegenstand der vorliegenden Anmeldung ist somit ein Verfahren zur Herstellung von Polyestercarbonaten, dadurch gekennzeichnet, dass die Kondensation in einer ersten Stufe als Schmelzumesterungsverfahren bis zum Oligomeren erfolgt und diese anschließend in einer zweiten Stufe nach dem Phasengrenzflächenverfahren zum polymeren Polyestercarbonat aufkondensiert werden.

Als Schmelzumesterungsverfahren zur Herstellung der Oligocarbonate in der ersten Stufe des erfindungsgemäßen Verfahrens kommen prinzipiell alle im Stand der Technik bekannten Schmelzumesterungsverfahren zur Herstellung von Polycarbonat in Frage. Solche Verfahren sind zum Beispiel in den Anmeldungen DE-A-1 031 512, US-A 3 022 272, US-A 5 340 905, US-A 5 399 659, DE-A 4 312 390, US-A 5 912 318, US-A 5 932 683, US-A 5 912 289, WO 00/26 276 und EP-A 620 240 beschrieben. In der deutschen Anmeldung mit der Anmeldenammer 101 14 808.9 ist ebenfalls direkt ein Verfahren zur Herstellung von Oligocarbonaten beschrieben. Weitere Einzelheiten des Schmelzumesterungsverfahrens im allgemeinen sind beispielsweise in Hermann Schnell, Chemistry and Physics of Polycarbonates, Polymer Reviews, Vol. 9, 1964, Seiten 44 bis 51 zu finden.

Als Phasengrenzflächenverfahren zur Aufkondensation der Oligomere zum Polymeren in der zweiten Stufe des Erfindungsgemäßen Verfahrens kommen prinzipiell alle im Stand der Technik bekannten Phasengrenzflächenverfahren zur Herstellung von Polycarbonat in Frage. Solche Verfahren sind beispielsweise in
- Schnell, "Chemistry and Physics of Polycarbonates", Polymer Reviews, Volume 9, Interscience Publishers, New York, London, Sydney 1964, S. 33 ff.
- D.C. Prevorsek, B.T. Debona und Y. Kesten, Corporate Research Center, Allied Chemical Corporation, Morristown, New Jersey 07960: "Synthesis of Poly(ester Carbonate) Copolymers" in Journal of Polymer Science, Polymer Chemistry Edition, Vol. 18,(1980), S. 75 ff.;
- D. Freitag, U. Grigo, P.R. Müller, N. Nouvertne', BAYER AG, "Polycarbonates" in Encyclopedia of Polymer Science and Engineering, Volume 1 1, Second Edition, 1988, S. 651 ff., und schließlich
- Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118 ff. und 138 ff.
beschrieben.

Gemäß dem erfindungsgemäßen Verfahren wird in einem ersten Schritt eine Mischung aus Dihydroxyverbindung und Diarylcarbonat in Inertgasatmosphäre und unter reduziertem Druck bis zu einer Temperatur von 200 - 290°C erhitzt, und dabei die entstehende Hydroxyarylkomponente abdestilliert. Anschließend wird die Dicarbonsäure, bzw. Dicarbonsäuremischung, zugesetzt, das Reaktionsgemisch unter Vakuum erhitzt und zum Oligomer aufkondensiert. Zu jedem Zeitpunkt wird der Druck so gewählt, dass die Hydroxyarylkomponente problemlos abdestilliert werden kann. In einem zweiten Schritt wird das so gewonnene Oligomer im Phasengrenzflächenprozess zum Polyestercarbonat aufkondensiert. Dafür wird das Oligomere zunächst in einem inerten Lösungsmittel gelöst, bevor in Gegenwart von wässriger, alkalischer Lösung die Aufkondensation mit Phosgen erfolgt. Die Reaktionstemperatur liegt zwischen 0 - 50°C. Durch eine anschließende Wäsche wird die organische Lösung gereinigt und das Lösungsmittel entfernt.

Das erfindungsgemäß erhaltene Polyestercarbonat ist farbhell, d.h. es weist eine Farbzahl von < 0,1 auf.

Die oben oder nachfolgend aufgeführten allgemeinen oder in Vorzugsbereichen aufgeführten Restedefinitionen, Parameter bzw. Erläuterungen können auch untereinander, also zwischen den jeweiligen Bereichen und Vorzugsbereichen beliebig kombiniert werden. Sie gelten für die Endprodukte sowie für die Vor- und Zwischenprodukte und für Verfahren sowie Verfahrensschritte entsprechend.

Für das erfindungsgemäße Verfahren geeignete Dicarbonsäuren sind solche der Formel (I)

HOOC-T-COOH (I)

wobei T einen verzweigten oder linearen, gesättigten oder ungesättigten Alkyl-, Arylalkyl- oder Cycloalkylteil aus 4-40 Kohlenstoffen darstellt. Bevorzugt sind gesättigte, lineare Alkyldisäuren mit 4-40 Kohlenstoffen, besonders bevorzugt mit 12-36 Kohlenstoffen. Aus diesen Substanzklassen sind wiederum Fettsäuren, besonders bevorzugt hydrierte, dimere Fettsäuren besonders geeignet.
Die Dicarbonsäuren der Formel (I) können außerdem mit aliphatischen, araliphatischen oder aromatischen Hydroxycarbonsäuren mit 4 bis 40 Kohlenstoffatomen wie Salicylsäure oder p-Hydroxybenzoesäure gemischt werden. Statt der Dicarbonsäuren können auch deren Precursorverbindungen wie z. B. Anhydride, Lactone oder Phenylester eingesetzt werden, welche unter den Bedingungen der Oligomerbildung die Dicarbonsäuren in situ freisetzen.
Bevorzugte Dicarbonsäuren der Formel (I) sind, bzw. bevorzugte Mischungen solcher Fettsäuren bestehen aus
Adipinsäure,
cis- oder trans-1,2-Cyclohexandicarbonsäure,cis-oder trans-1,3-Cyclohexandicarbonsäure,
cis- oder trans-1,4-Cyclohexandicarbonsäure,
Sebacinsäure,
α,ω-Dodecandisäure,
α,ω-Octadecandisäure
Phthalsäure
Isophthalsäure
Terephthalsäure,
.hydrierte Dimerfettsäuren, wie z.B. Pripol 1009 von Uniqema.

Hydrierte dimere Fettsäuren im Zusammenhang mit dieser Erfindung sind Säuren, die durch Dimerisierung von ungesättigten monobasischen Fettsäuren mit 16 bis 22 Kohlenstoffatomen und anschließende Hydrierung erhalten werden können. Die erforderlichen Säuren können beispielsweise aus pflanzlichen oder tierischen Quellen gewonnen werden. Synthese und Eigenschaften werden z.B. in Encyclopedia of Chemical Technology, Vol. 8, 4^{th} ed., John Wiley&Sons:1993, Seite 223-237 dargelegt.

Pripol 1009 von Uniqema ist eine Mischung von hydrierten dimeren Fettsäuren, die sich nach Angaben von Uniqema etwa wie folgt zusammensetzt:

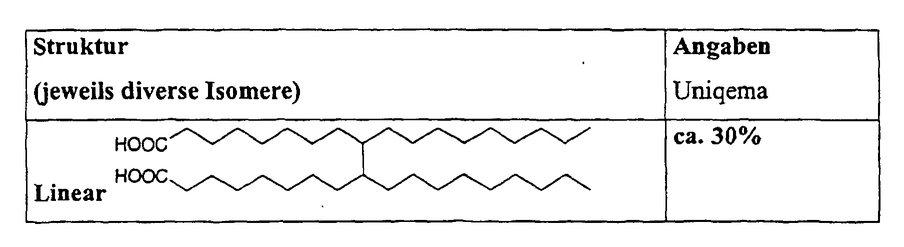

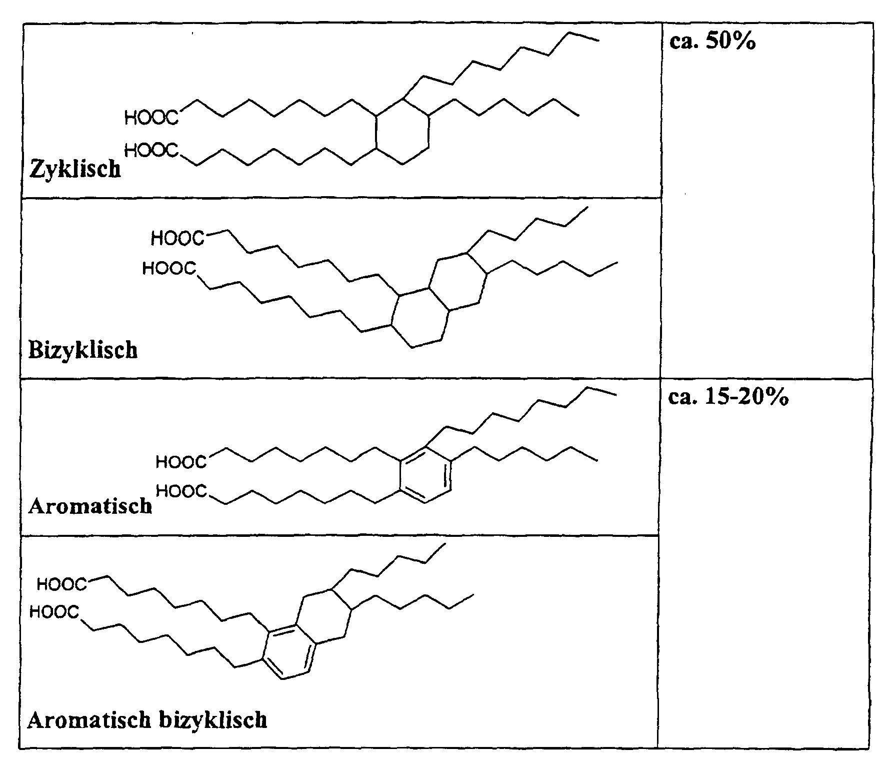

Besonders bevorzugt sind Dodecandisäure und hydrierte dimere Fettsäuren.

Am meisten bevorzugt sind hydrierte dimere Fettsäuren.

Es können sowohl eine Dicarbonsäure der Formel (I) als auch mehrere unterschiedliche Dicarbonsäuren der Formel (I) verwendet werden.

Die verwendeten Dicarbonsäuren wie auch die übrigen verwendeten Rohstoffe, zugesetzten Chemikalien und Hilfsstoffe sollten selbstverständlich so rein wie möglich sein. Bei käuflichen Produkten ist die Reinheit aber oft stark unterschiedlich. Besonders Fettsäuren oder hydrierte, dimerisierte Fettsäuren können erhebliche Mengen an Nebenprodukten enthalten, die bei der Herstellung entstehen.

Bevorzugt werden deshalb hydrierte dimere Fettsäuren, die neben den genannten Strukturelementen nur geringe Anteile an ungesättigten aliphatischen Gruppen enthalten. Bevorzugt sind Dimerfettsäuren mit einer Iodzahl kleiner als etwa 15.

Außerdem kann in den Dimerfettsäuren eine geringe Menge an mono- und polybasischen Fettsäuren enthalten sein. Produkte mit sehr geringen Anteilen dieser Komponenten, insbesondere mit geringen Anteilen an drei- und mehrbasischen Säuren, eignen sich besonders zur Herstellung der erfindungsgemäßen Polyestercarbonate. Bevorzugt werden deshalb Dimerfettsäuren mit einem Anteil an drei- und mehrbasischen Säuren von kleiner etwa 1,5 %, bestimmt durch Gaschromatographie.

Die Dicarbonsäuren relativ zur Dihydroxyverbindung können im erfindungsgemäßen Verfahren im Molverhältnis X : 1, eingesetzt werden, wobei 0 < X <1, bevorzugt 0,01 < X < 0,99, besonders bevorzugt 0,02 < X < 0,5 und ganz besonders bevorzugt 0,08 < X < 0,2 ist.

Für das erfindungsgemäße Verfahren geeignete Dihydroxyverbindungen sind solche der Formel (II)

HO-Ar-OH (II)

in denen Ar ein aromatischer Rest mit 6 bis 30 C-Atomen ist, bevorzugt mit 6 bis 25 C-Atomen, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyverbindungen der Formel (II) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'- Bis-(hydroxyphenyl)-diisopropylbenzole
sowie deren kernalkylierte und kernhalogenierte Verbindungen.

Diese und weitere geeignete andere Diphenole sind z. B. in US-A 3 028 365, 3 148 172, 3 275 601, 2 991 273, 3 271 367, 3 062 781, 2 970 131 und 2 999 846, in DE-A 1 570 703, 2 063 050, 2 063 052, 2 211 0956, der FR-B 1 561 518 und in der Monographie "H. Schnell, Chemistry and Physics of Polycarbonates, Interscience Publishers, New York 1964" beschrieben.

Bevorzugte Dihydroxyverbindungen sind beispielsweise:
4,4'-Dihydroxydiphenyl,
2,2-Bis-(4-hydroxyphenyl)propan,
2,4-Bis-(4-hydroxyphenyl)-2-methylbutan,
1,1-Bis-(4-hydroxyphenyl)cyclohexan,
1,1-Bis-(4-hydroxyphenyl)-4-methylcyclohexan,
α,α'-Bis-(4-hydroxyphenyl)-p-diisopropylbenzol,
α,α'-Bis-(4-hydroxyphenyl)-m-diisopropylbenzol,
Bis-(4-hydroxyphenyl)sulfon,
Bis-(4-hydroxyphenyl)methan,
1,1-Bis-(4-hydroxyphenyl)-3,3,5-trimethylcyclohexan,
Bis-(2,6-dimethyl-4-hydroxyphenyl)propan,
Bis-(4-hydroxyphenyl)hexafluorpropan,
(4-Hydroxyphenyl)-1-phenylethan,
(4-Hydroxyphenyl)diphenylmethan,
Dihydroxydiphenylether,
4,4'-Thiobisphenol,
Bis-(4-Hydroxyphenyl)-1-(1-naphthyl)ethan,
Bis-(4-Hydroxyphenyl)-1-(2-naphthyl)ethan,
Dihydroxy-3-(4-hydroxyphenyl)-1,1,3-trimethyl-1*H-*inden-5-ol,
Dihydroxy-1-(4-hydroxyphenyl)-1,3,3-trimethyl-1*H*-inden-5-ol,
2,2',3,3'-Tetrahydro-3,3,3',3'-tetramethyl-1,1'-Spirobi[1*H*-inden]-5,5'-diol,
1,1-Bis-(3-methyl-4-hydroxyphenyl)cyclohexan,
2,2-Bis-(3-methyl-4-hydroxyphenyl)propan.

Besonders bevorzugt sind
Resorcin,
Bis-(4-Hydroxyphenyl)-1-(1-naphthyl)ethan,
Bis-(4-Hydroxyphenyl)-1-(2-naphthyl)ethan,
2,2-Bis-(4-hydroxyphenyl)propan,
α,α'-Bis-(4-hydroxyphenyl)-p-diisopropylbenzol,
α,α'-Bis-(4-hydroxyphenyl)-m-diisopropylbenzol,
1,1-Bis-(4-hydroxyphenyl)cyclohexan,
4,4'-Dihydroxydiphenyl,
Bis-(4-hydroxyphenyl)-3,3,5-trimethylcyclohexan,
Bis-(4-Hydroxyphenyl)diphenylmethan,
Dihydroxy-3-(4-hydroxyphenyl)-1,1,3-trimethyl-1*H*-inden-5-ol,
Dihydroxy-1-(4-hydroxyphenyl)-1,3,3-trimethyl-1*H*-inden-5-ol,
2,2',3,3'-Tetrahydro-3,3,3',3'-tetramethyl-1,1'-Spirobi[1*H*-inden]-5,5'-diol,
1,1-Bis-(3-methyl-4-hydroxyphenyl)cyclohexan,
2,2-Bis-(3-methyl-4-hydroxyphenyl)propan.

Ganz besonders bevorzugt sind
Bis-(4-hydroxyphenyl)-3,3,5-trimethylcyclohexan,
4,4'-Dihydroxydiphenyl,
2,2-Bis-(4-hydroxyphenyl)propan.

Außerordentlich bevorzugt ist Bis-(4-hydroxyphenyl)-3,3,5-trimethylcyclohexan.

Es können sowohl ein Diphenol der Formel (II) als auch mehrere unterschiedliche Diphenole der Formel (II) verwendet werden.

Das erfindungsgemäße Verfahren kann kontinuierlich oder batchweise ausgeführt werden.

Gemäß dem erfindungsgemäßen Verfahren wird in einem ersten Schritt eine Mischung aus Dihydroxyverbindung und Diarylcarbonat in Inertgasatmosphäre und unter reduziertem Druck bis zu einer Temperatur von 200 - 290°C, bevorzugt von 230 - 290°C, besonders bevorzugt von 250 - 280°C erhitzt, und dabei die entstehende Hydroxyarylkomponente abdestilliert. Der Druck wird so gewählt, dass die Hydroxyarylkomponente problemlos abdestilliert werden kann. Anschließend wird die Dicarbonsäure, bzw. Dicarbonsäuremischung, zugesetzt, das Reaktionsgemisch wird nun unter Vakuum über 0,5 - 4 h, bevorzugt 2 - 3 h zum Oligomer aufkondensiert.. Dabei sollte der Druck nach Zugabe der Säure bis zum Ende der Reaktion mindestens die Hälfte der Zeit ≥ 60 mbar betragen.

Für die Synthese der Oligomeren über die Schmelzeumesterung kommen neben Diphenolen und Disäuren Diarylcarbonate zu Einsatz. Diarylcarbonate im Sinne vorliegender Erfindung sind solche Kohlensäurediester der Formel (III) 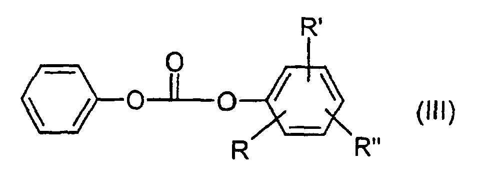 und Formel (IV), 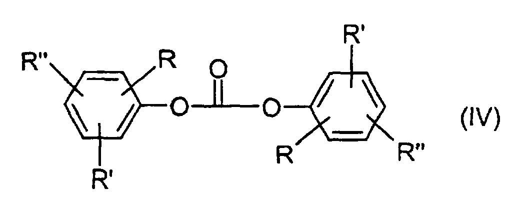 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können, beispielsweise Diphenylcarbonat,
Butylphenyl-phenylcarbonat, Di-Butylphenylcarbonat,
Isobutylphenyl-phenylcarbonat, Di-Isobutylphenylcarbonat,
tert-Butylphenyl-phenylcarbonat, Di-tert-Butylphenylcarbonat,
n-Pentylphenyl-phenylcarbonat, Di-(n-Pentylphenyl)carbonat,
n-Hexylphenyl-phenylcarbonat, Di-(n-Hexylphenyl)carbonat,
Cyclohexylphenyl-phenylcarbonat, Di-Cyclohexylphenylcarbonat,
Phenylphenol-phenylcarbonat, Di-Phenylphenolcarbonat,
Isooctylphenyl-phenylcarbonat, Di-Isooctylphenylcarbonat,
n-Nonylphenyl-phenylcarbonat, Di-(n-Nonylphenyl)carbonat,
Cumylphenyl-phenylcarbonat, Di-Cumylphenylcarbonat,
Naphthylphenyl-phenylcarbonat, Di-Naphthylphenylcarbonat,
Di-tert-Butylphenyl-phenylcarbonat, Di-(Di-tert-Butylphenyl)carbonat,
Dicumylphenyl-phenylcarbonat, Di-(Dicumylphenyl)carbonat,
4-Phenoxyphenyl-phenylcarbonat, Di-(4-Phenoxyphenyl)carbonat,
3-Pentadecylphenyl-phenylcarbonat, Di-(3-Pentadecylphenyl)carbonat,
Tritylphenyl-phenylcarbonat, Di-Tritylphenylcarbonat,
bevorzugt
Diphenylcarbonat,
tert-Butylphenyl-phenylcarbonat, Di-tert-Butylphenylcarbonat,
Phenylphenol-phenylcarbonat, Di-Phenylphenolcarbonat,
Cumylphenyl-phenylcarbonat, Di-Cumylphenylcarbonat,
besonders bevorzugt Diphenylcarbonat.

Die Kohlensäurediester werden in einem Molverhältnis von 60 bis 100 Mol.%, bevorzugt 70-90 Mol.%, besonders bevorzugt 75-85 Mol.% relativ zur Summe aus Dihydroxyverbindung und Dicarbonsäure eingesetzt Es können auch Mischungen der oben genannten Kohlensäurediester oder Dicarbonsäuren eingesetzt werden.

Für die Synthese zum Oligomeren können die für die Schmelzumesterung üblichen Katalysatoren verwendet werden, bevorzugt sind jedoch Ammonium- oder Phosphoniumverbindungen. Sie werden bevorzugt in Mengen von 0,0001 bis 0,8 mol%, bezogen auf die Summe aus Dicarbonsäure und Dihydroxyverbindung, besonders bevorzugt in Mengen von 0,01 bis 0,6 mol%, eingesetzt.

Besonders bevorzugt werden als Katalysator für die Herstellung der erfindungsgemäßen Polyestercarbonate im ersten Schritt Phosphoniumsalze verwendet, gegebenenfalls in Kombination mit anderen geeigneten Katalysatoren, die nicht zu erhöhter Eigenfarbe führen.

Phosphoniumsalze im Sinne der Erfindung sind solche der Formel (V), 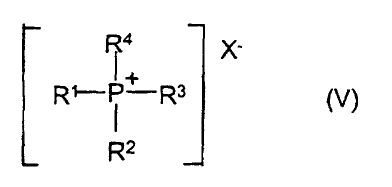 wobei R¹⁻⁴ dieselben oder verschiedene C₁-C₁₀-Alkeyle, C₆-C₁₀-Aryle, C₇-C₁₀-Aralkyle oder C₅-C₆-Cycloalkyle sein können, bevorzugt Methyl oder C₆-C₁₄-Aryle, besonders bevorzugt Methyl oder Phenyl, und X⁻ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R C₆-C₁₄-Aryl oder C₇-C₁₂-Aralkyl, bevorzugt Phenyl, sein kann.

Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Die erhaltenen Oligomere haben mittlere Gewichtsmolekulargewichte von Mw 1.000 bis 15.000, bevorzugt 1.000 bis 10.000, besonders bevorzugt 1.500 bis 5.000, ermittelt durch MALDI-MS oder Messung der relativen Lösungsviskosität in Dichlormethan oder in Mischungen gleicher Gewichtsmengen Phenol/o-Dichlorbenzol, geeicht durch Lichtstreuung, wie in Hans-Georg Elias, Makromoleküle, Hüthig & Wepf Verlag, Basel, New York 1990, 5. Aufl., S. 85-93 beschrieben.

Das Oligomer darf möglichst keine freie Säure oder Säuregruppen enthalten, d. h. die Säurezahl sollte <0,01 sein, bevor es in der zweiten Stufe eingesetzt werden kann. Die OH-Zahl wird bestimmt, um die benötigte Mindestmenge an Phosgen, den Kettenabbrecher und den Katalysator zu ermitteln.

In der zweiten Stufe werden die erhaltenen Oligomere zur Aufkondensation über das Phasengrenzflächenverfahren zunächst in einem inerten Lösungsmittel, bevorzugt Methylenchlorid, gelöst, oder es wird direkt ein inertes Lösungsmittel der Oligomer-Schmelze zugesetzt.

Die Oligomerlösung wird in Gegenwart von wässriger, alkalischer Lösung mit Phosgen aufkondensiert. Die Reaktionstemperatur liegt zwischen 0 - 50°C, bevorzugt zwischen 10 - 40°C, besonders bevorzugt zwischen 15 - 35°C. Als alkalische Komponenten können alle in Wasser löslichen oder dispergierbaren Alkali- und Erdalkalihydroxide, bevorzugt jedoch Natriumhydroxid, Kaliumhydroxid, Magnesiumhydroxyd und oder Calciumhydroxid (Aufschlämmung von Calciumoxid in Wasser) oder deren Mischungen verwendet werden. Besonders bevorzugt ist Natriumhydroxid, die Menge beträgt mindestens 100 mol %, bevorzugt 600 - 100 mol %, besonders bevorzugt 400 - 100 mol %, insbesondere 120 - 110 mol %, bezogen auf die Zahl an Hydroxygruppen im Reaktionsgemisch.

Katalysatoren sind Ammonium- oder/und Phosphoniumverbindungen oder tert. Amine, wie sie in der Literatur beschrieben sind, insbesondere N-Ethylpiperidin, N-Methylpiperidin, Triethylamin und Tributylamin, oder deren Mischungen, wobei diese Katalysatoren in einer Dosierung oder aber auch durch mehrere Dosierungen in zeitlichem (Batchverfahren) oder räumlichem (Kontiverfahren) Abstand zugegeben werden können. Die bevorzugte Menge liegt bei 0,005 bis 5 mol %, besonders bevorzugt bei 0,01 bis 3,5 mol %, bezogen auf die Zahl an Hydroxygruppen im Reaktionsgemisch.

Das Molekulargewicht wird über einen Kettenabbrecher gesteuert. Die zugesetzte Menge wird auf das gewünschte Molekulargewicht des Polyestercarbonats angepasst. Das Molekulargewicht wird so gewählt, dass eine thermoplastische Verarbeitung des Carbonats möglich ist, und liegt bevorzugt im Bereich von Mw 15.000 bis 40.000, besonders bevorzugt von Mw 17.000 bis 30.000. Die Menge des Kettenabbrechers liegt daher gewöhnlich, je nach gewünschtem Molekulargewicht, bei 5 bis 0,25 mol %, bevorzugt 4 bis 1 mol %, bezogen auf die Zahl an Hydroxygruppen im Reaktionsgemisch. Die Zugabe der Kettenabbrecher kann vor, während oder nach der Phosgenierung erfolgen.

Geeignete Kettenabbrecher sind sowohl Monophenole als auch Monocarbonsäuren. Geeignete Monophenole sind Phenol, Alkylphenole wie Kresole, p-tert.Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, bzw. deren Mischungen. Bevorzugt sind p-tert.-Butylphenol oder Phenol, besonders bevorzugt p-tert.-Butylphenol.

Geeignete Monocarbonsäuren sind Benzoesäure, Alkylbenzoesäuren und Halogenbenzoesäuren.

Dem Oligomeren kann wahlweise zur Aufkondensation noch weiteres Bisphenol und/oder weiteres Oligomer in beliebiger Menge zugegeben werden, um den Gehalt an Disäure im Polyestercarbonat einzustellen. Dabei kann das zugegebene Bisphenol oder Oligomer identisch oder verschieden von dem im Oligomer verwendeten Bisphenol bzw. vom Oligomer selbst sein. Es können auch Mischungen aus verschiedenen Oligomeren und/oder Bisphenolen verwendet werden. Bevorzugte Mengen an zugesetztem Bisphenol liegen zwischen 30 : 70 bis 0 : 100, besonders bevorzugt 20 : 80 bis 3 : 97 gewichtsbezogen im Verhältnis zum Oligomeren.

Die Polyestercarbonate können gezielt verzweigt werden und können daher geringe Mengen von 0,02 bis 3,6 mol %, bevorzugt 0,05 bis 2,5 mol %, bezogen auf die Summe aus Dicarbonsäure und Dihydroxyverbindung, an Verzweigern enthalten. Geeignete Verzweiger sind die in der Polycarbonatchemie bekannten tri- oder multifunktionellen Verbindungen, insbesondere solche mit drei oder mehr phenolischen OH-Gruppen.
Es ist möglich, als Verzweiger einen Anteil an tri- oder höherfunktionellen aliphatischen, araliphatischen oder aromatischen Carbonsäuren bei der Herstellung der Oligomere einzusetzen. Beispiele dafür sind z.B. hydrierte trimere Fettsäuren oder Trimesinsäure.

Geeignete Verzweiger sind beispielsweise Phloroglucin, 4,6-Dimethyl-2,4,6-tris-(4-hydroxyphenyl)-hepten-2,4,6-Dimethyl-2,4,6-tris-(4-hydroxyphenyl)-heptan, 1,3,5-Tris-(4-hydroxyphenyl)-benzol, 1,1,1 -Tris-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methylbenzyl)-4-methylphenol, 2-(4-Hydroxyphenyl)-2-(2,4-dihydroxyphenyl)-propan, Hexa-(4-(4-hydroxyphenyl-isopropyl)phenyl)-orthoterephthalsäureester, Tetra-(4-hydroxyphenyl)-methan, Tetra-(4-(4-hydroxy-phenyl-isopropyl)-phenoxy)-methan und 1,4-Bis(4',4"-dihydroxy-triphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol, bevorzugt hydrierte trimere Fettsäuren,1,1,1-Tris-(4-hydroxyphenyl)ethan und Isatinbiskresol.

Diese Verzweiger können in jeder beliebigen Stufe des Verfahrens zugegeben werden, also sowohl in der ersten Stufe bei der Herstellung der Oligomeren in der Schmelzeumesterung als auch in der zweiten Stufe bei der Herstellung der Polyestercarbonate im Phasengrenzflächenverfahren. In der zweiten Stufe können sie entweder mit den Diphenolen und den Kettenabbrechern in der wässrig alkalischen Phase vorgelegt oder in einem organischen Lösungsmittel gelöst vor der Phosgenierung zugegeben werden.

Alle diese Maßnahmen zur Herstellung der Polyestercarbonate sind dem Fachmann geläufig.

Der Feststoffgehalt der zu waschenden Polyestercarbonatlösung kann je nach Molekulargewicht des Polyestercarbonates zwischen 0,5 Gew. % Polyestercarbonat und 30 Gew.-% schwanken, bevorzugt sind bei Molekulargewichten (Mw) zwischen 8.000 und 50.000 Polyestercarbonat-Feststoffgehalte zwischen 2 Gew.-% und 25 Gew.-%, bevorzugt zwischen 5 Gew. % bis 22 Gew.-% Polyestercarbonat, besonders bevorzugt Polyestercarbonat-Feststoffgehalte zwischen 7 Gew.-% und 20 Gew.-% und bei Molekulargewichten (Mw) > 50000 zwischen 2 Gew.-% bis 15 Gew.-% Polyestercarbonat.

Als organisches Lösungsmittel der zu waschenden Polyestercarbonatlösung werden solche Lösungsmittel verwandt, die das betreffende Polyestercarbonat lösen und mit Wasser ein zweiphasiges Synthesegemisch ergeben, wie aliphatische, gegebenenfalls verzweigte, teil- oder total-halogenierte Lösungsmittel mit 1- 10 Kohlenstoffatomen, wobei als Halogen Chlor oder Fluor verwendet wird, wie Methylenchlorid, Trichlorethan, Tetrachlorethen, weiterhin aromatische gegebenenfalls substituierte Verbindungen mit 6-18 C-Atomen wie Benzol, Toluol, o/m/p-Xylol, Methoxy- oder Ethoxybenzol, Diphenyl, Diphenylether, Chlorbenzol, o/m/p-Dichlorbenzol, sowie auch Mischungen aus diesen Lösungsmitteln.

Zur Änderung der Eigenschaften können den erfindungsgemäßen Polyestercarbonaten Hilfs- und Verstärkungsstoffe zugemischt werden. Als solche sind u. a. in Betracht zu ziehen: Thermo- und UV-Stabilisatoren, Fließhilfsmittel, Entformungsmittel, Flammschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstofffasem, Pigmente und deren Kombination. Solche Verbindungen werden z. B. in WO 99/55772, S. 15 - 25, und in "Plastics Additives", R. Gächter und H. Müller, Hanser Publishers 1983, beschrieben.

Weiterhin können den erfindungsgemäßen Polyestercarbonaten auch andere Polymere zugemischt werden, z.B. Polyolefine, Polyurethane, Polyester, Acrylnitrilbutadienstyrol und Polystyrol.

Der Zusatz dieser Stoffe erfolgt vorzugsweise auf herkömmlichen Aggregaten zum fertigen Polyestercarbonat, kann jedoch, je nach den Erfordernissen, auch auf einer anderen Stufe des Herstellverfahrens erfolgen.

Die nach dem erfindungsgemäßen Verfahren erhältlichen Polyestercarbonate können auf üblichen Maschinen, beispielsweise auf Extrudern oder Spritzgussmaschinen, zu beliebigen Formkörpern, beispielsweise zu Folien oder Platten, in üblicher Weise verarbeitet werden.

Die erfindungsgemäßerhältlichen Polyestercarbonate bzw. der entsprechenden Formmassen sind geeignet zur Herstellung von Formkörpern und Extrudaten, insbesondere optischen Artikeln, Folien und Platten, bzw. die entsprechenden Formkörper, vorzugsweise optischen Artikel, hergestellt aus den erfindungsgemäßen Polyestercarbonaten.

Beispiele für diese Verwendung sind, ohne sie beschränken zu wollen: Sicherheitsscheiben, Extrusions- und Lösungsfolien für Displays oder Elektromotoren, Herstellung von lichtdurchlässigen Platten, zur Herstellung von Ampelgehäusen oder Verkehrsschildern, zur Herstellung von Präzisionsspritzgussteilen, optische Anwendungen wie optische Speicher (CD, DVD, MD), zur Herstellung von Leuchten, für Sportartikel, für Anwendungen im Auotmobilbereich, für Haushaltsartikel und Elektround Elektronikgeräten oder für sonstige Anwendungen, beispielsweise:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-A 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildern.
7. Zur Herstellung von Schaumstoffen (siehe beispielsweise DE-B 1 031 507).
8. Zur Herstellung von Fäden und Drähten (siehe beispielsweise DE-B 1 137 167 und DE-A 1 785 137).
9. Als transluzente Kunststoffe mit einem Gehalt an Glasfasern für lichttechnische Zwecke (siehe beispielsweise DE-A 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreunenden Formteilen.
11. Zur Herstellung von Präzisionsspritzgussteilchen, wie beispielsweise Linsenhalterungen. Hierzu verwendet man Polyestercarbonate mit einem Gehalt an Glasfasern, die gegebenenfalls zusätzlich etwa 1 - 10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-A 2 701 173).
13. Als Lichtübertragungsträger, insbesondere als Lichtleiterkabel (siehe beispielsweise EP-A1 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices
17. Als Trägermaterial für organische Fotoleiter.
18. Zur Herstellung von Leuchten, z.B. Scheinwerferlampen, als sogenannte "headlamps", Streulichtscheiben oder innere Linsen.
19. Für medizinische Anwendungen, z.B. Oxygenatoren, Dialysatoren.
20. Für Lebensmittelanwendungen, wie z. B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
22. Für Sportartikel, wie z. B. Slalomstangen oder Skischuhschnallen.
23. Für Haushaltsartikel, wie z. B. Küchenspülen und Briefkastengehäuse.
24. Für Gehäuse, wie z. B. Elektroverteilerschränke.
25. Gehäuse für Elektrozahnbürsten und Föngehäuse
26. Transparente Waschmaschinen - Bullaugen mit verbesserter Beständigkeit gegenüber der Waschlösung.
27. Schutzbrillen, optische Korrekturbrillen.
28. Lampenabdeckungen für Kücheneinrichtungen mit verbesserter Beständigkeit gegenüber Küchendunst insbesondere Öldämpfen.
29. Verpackungsfolien für Arzneimittel.
30. Chip-Boxen und Chip-Träger
31. Für sonstige Anwendungen, wie z. B. Stallmasttüren oder Tierkäfige.

Ganz besonders geeignet sind die erfindungsgemäß erhältlichen Polyestercarbonate für die Herstellung von optischen und magnetooptischen Artikeln, insbesondere Datenspeicher wie CD, DVD, MD und deren Abkömmlinge, d.h. beschreibbare und wiederbeschreibbare Datenträger, z.B. CD-ROM, CD-R, CD-RW, DVD-ROM, HD-DVD und andere.

### Beispiele

Die Säurezahl wurde gemäß DIN EN ISO 3682, die OH-Zahl gemäß DIN EN ISO 4629 gemessen.

Die relative Lösungsviskosität wurde in Dichlormethan bei einer Konzentration von 5 g/l bei 25°C bestimmt.

Der Gehalt an phenolischem OH wird durch IR-Messung erhalten. Zu diesem Zweck wird eine Differenzmessung von einer Lösung aus 2 g Polymer in 50 ml Dichlormethan gegenüber reinem Dichlormethan vermessen und die Extinktionsdifferenz bei 3582 cm⁻¹ bestimmt.

Der Gehalt an Gew. % der veresterten Säure (x) im Polyestercarbonat wird anhand einer Lösung von 1 g Polyestercarbonat in 100 ml Dichlormethan ermittelt. Hierfür wird ein IR-Spektrum der Lösung aufgenommen und nach der PLS-Methode ausgewertet. Bei der PLS-Auswertung werden die Spektralbereiche 1919-1581 cm⁻¹ sowie 2739-2894 cm⁻¹ verwendet. Die Kalibrierung erfolgte mit 29 Proben bekannter Zusammensetzung.

Die Bestimmung der freien Carbonsäuregruppen im Polyestercarbonat (y) erfolgte ebenfalls über IR-Spektroskopie an der obigen Lösung. Es wurden Spektren von Dichlormethan, Wasserdampf und einem säure- und anhydridfreien Polyestercarbonat mit 20 Gew.% Pripol subtrahiert und die Extinktionsdifferenz bei 1709 cm⁻¹ ausgewertet. Die Messung wurde an Polyestercarbonaten mit verschiedenen Pripol-Gehalten kalibriert. Werte < 0,01 wurden gleich Null gesetzt.

Die Ermittlung der Anhydrid-Struktur (z) erfolgte anhand des obigen IR-Spektrums durch Auswertung der Extinktion bei 1816 cm⁻¹ abzüglich der Extinktion bei 1860 cm⁻¹ sowie eines Beitrags von 0,031. Die Methode ist nicht kalibriert.

Die Farbzahl wurde als Differenz der Extinktion bei 420 nm und 700 nm in Dichlormethan bei einer Konzentration von 2,4 g/50 ml und einer Schichtdicke von 10 cm ermittelt.

### Beispiel 1

1240,00 g (4,0 mol) Bisphenol TMC, 771,19 g (3,6 mol) Diphenylcarbonat und 0,9874 g (1,6 · 10⁻³ mol) Tetraphenylphosphoniumphenolat werden in einen Rührbehälter eingewogen. Der Behälter wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 30 Minuten abdestilliert. Nun wird die Temperatur auf 235°C erhöht, anschließend langsam auf 270°C eingestellt und eine Stunde gerührt. Nun werden 336,22 g (0,6 mol) Pripol 1009 zugegeben und 90 Minuten bei 100 mbar gerührt. Das Vakuum wird anschließend langsam auf< 2 mbar reduziert und weitere 50 Minuten gerührt. Es wird ein klares Harz erhalten, das eine Säurezahl von 0 und eine OH-Zahl von 60 aufweist. Es wird weiter im Phasengrenzflächenverfahren eingesetzt.

In einem 11 Wellenbrecherkolben mit Metallrührer, pH-Elektrode, Einleitungsrohr, Thermometer und Tropftrichter werden 36,86 g des erhaltenen Harzes werden in 277,1 g Methylenchlorid unter Rühren gelöst. Nachdem das Harz vollständig gelöst ist, wird eine Lösung aus 1,94 g Bisphenol TMC, 2,5 g Natriumhydroxid und 277,1 g destilliertem Wasser zugegeben und 5 Minuten gerührt. Anschließend werden bei 15 - 35°C und einem pH-Wert von 11 - 13 7,6 g Phosgen eingeleitet. Nach Beendigung der Phosgenierung wird 5 Minuten gerührt, dann werden 0,28 g p-tert-Butylphenol zudosiert. Nach weiteren 5 Minuten werden 0,2 g N-Ethylpiperidin zugegeben. Nach einer Nachrührzeit von 30 Minuten werden die Phasen getrennt, die org. Phase wird mit ca.10%iger Salzsäure angesäuert und mit destilliertem Wasser elektrolytfrei gewaschen. Die Phasenverhältnisse betragen 1 : 1 Volumenteile. Die gewaschene organische Phase wird mit Natriumsulfat getrocknet, abfiltriert und bei 100°C über 16 h im Vakuumtrockenschrank getrocknet.

Die Ergebnisse sind in Tabelle 1 zusammengefasst.

### Vergleichsbeispiel 1

1078,80 g (3,48 mol) Bisphenol TMC, 891,16 g (4,16 mol) Diphenylcarbonat und 0,9874 g (1,6 · 10⁻³ mol) Tetraphenylphosphoniumphenolat werden in einen Rührbehälter eingewogen. Der Behälter wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 60 Minuten abdestilliert. Nun wird die Temperatur auf 235°C erhöht, nach 15 Minuten das Vakuum auf 60 mbar und nach weiteren 15 Minuten die Temperatur auf 250°C eingestellt. Nach wiederum 15 Minuten wird die Temperatur auf 280°C erhöht und 292,50 g (0,52 mol) Pripol 1009 zugegeben und eine Stunde gerührt. Das Vakuum wird anschließend auf 0,5 mbar reduziert und weitere 75 Minuten gerührt. Die Ergebnisse sind in Tabelle 1 zusammengefasst.

### Vergleichsbeispiel 2

1078,80 g (3,48 mol) Bisphenol TMC, 908,29 g (4,24 mol) Diphenylcarbonat und 0,9874 g (1,6 · 10⁻³ mol) Tetraphenylphosphoniumphenolat werden in einen Rührbehälter eingewogen. Der Behälter wird durch Anlegen von Vakuum und Spülen mit Stickstoff (dreimal) vom Luftsauerstoff befreit und das Gemisch bei 150°C und 100 mbar aufgeschmolzen. Die Temperatur wird auf 190°C erhöht und das entstehende Phenol über 60 Minuten abdestilliert. Nun wird die Temperatur auf 235°C erhöht, nach 30 Minuten das Vakuum auf 60 mbar erhöht und 292,50 g (0,52 mol) Pripol 1009 zugegeben. Nach weiteren 15 Minuten wird die Temperatur auf 250°C und das Vakuum anschließend auf 5 mbar eingestellt. Nach wiederum 15 Minuten wird die Temperatur auf 280°C erhöht und nach 15 Minuten das Vakuum auf 0,5 mbar angelegt, dann wird die Temperatur auf 300°C eingestellt und weitere 90 Minuten gerührt. Die Ergebnisse sind in Tabelle 1 zusammengefasst.

**Tabelle 1**

| **Bsp.** | **Eta rel** | **FZ** | **% OH** | **x** | **y** | **z** |
|---|---|---|---|---|---|---|
| Bsp. 1 | 1,257 | 0,081 | | 19,8 | 0 | 0 |
| Vergl. Bsp. 1 | 1,179 | 0,157 | 0,036 | 18,8 | 0 | 0 |
| Vergl. Bsp. 2 | 1,183 | 0,522 | 0,006 | 18,6 | 0 | 0 |

Die Beispiele belegen klar die überraschende Überlegenheit des erfindungsgemäßen Verfahrens zur Herstellung von Polyestercarbonaten, welches zu Polyestercarbonaten führt, welche eine deutlich überlegene Farbzahl aufweisen, während die anderen Eigenschaften vergleichbar bleiben.

## Patentansprüche

1. Verfahren zur Herstellung von Polyestercarbonaten, **dadurch gekennzeichnet, daß** in einer ersten Stufe Oligomere nach einem Schmelzumesterungsverfahren hergestellt werden, welche anschließend in einer zweiten Stufe nach einem Phasengrenzflächenverfahren zum polymeren Polyestercarbonat aufkondensiert werden.

2. Verfahren nach Anspruch 1, bei dem in der ersten Stufe
• mindestens eine Dicarbonsäure der Formel (I)
HOOC-T-COOH (I),
wobei T einen verzweigten oder linearen, gesättigten oder ungesättigten Alkyl-, Arylalkyl- oder Cycloalkylteil aus 4-40 Kohlenstoffen darstellt,
• mindestens eine Dihydroxyverbindung der Formel (II)
HO-Ar-OH (II)
in denen Ar ein aromatischer Rest mit 6 bis 30 C-Atomen ist, bevorzugt mit 6 bis 25 C-Atomen, der einen oder mehrere aromatische Kerne enthalten kann, substituiert sein kann und aliphatische oder cycloaliphatische Reste bzw. Alkylaryle oder Heteroatome als Brückenglieder enthalten kann,
• mindestens ein Diarylcarbonat der Formel (III) und/oder (IV) 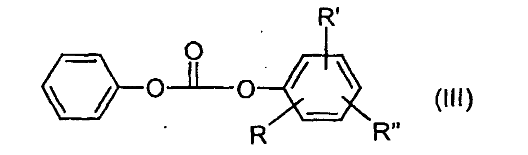 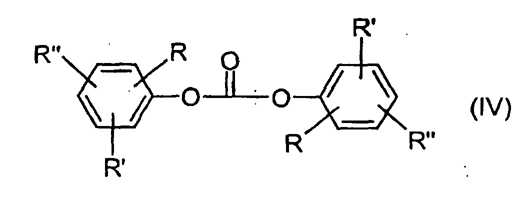 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl darstellen können,
• sowie optional ein Schmelzumesterungskatalysator zur Oligomersynthese eingesetzt werden.

3. Verfahren nach Anspruch 2, bei dem mindestens eine der Dicarbonsäuren aus der aus Adipinsäure, 1,2-Cyclohexandicarbonsäuren, 1,3-Cyclohexandicarbonsäuren, 1,4-Cyclohexandicarbonsäuren, Sebacinsäure, α, ω-Dodecandisäure, Phthalsäure, Isophthalsäure, Terephthalsäure, hydrierte Dimerfettsäuren bestehenden Gruppe eingesetzt wird.

4. Verfahren nach Anspruch 2, bei dem mindestens eine Dihydroxyverbindung aus der aus Resorcin, Bis-(4-Hydroxyphenyl)-1-(1-naphthyl)ethan, Bis-(4-Hydroxyphenyl)-1-(2-naphthyl)ethan, 2,2-Bis-(4-hydroxyphenyl)propan, α,α'-Bis-(4-hydroxyphenyl)-p-diisopropylbenzol, α,α'-Bis-(4-hydroxyphenyl)-mdiisopropylbenzol, 1,1-Bis-(4-hydroxyphenyl)cyclohexan, 4,4'-Dihydroxydiphenyl, Bis-(4-hydroxyphenyl)-3,3,5-trimethylcyclohexan, Bis-(4-Hydroxyphenyl)diphenylmethan, Dihydroxy-3-(4-hydroxyphenyl)-1,1,3-trimethyl-1*H*-inden-5-ol, Dihydroxy-1-(4-hydroxyphenyl)-1,3,3-trimethyl-1*H*-inden-5-ol, 2,2',3,3'-Tetrahydro-3,3,3',3'-tetramethyl-1,1'-Spirobi[1*H*-inden]-5,5'-diol, 1,1-Bis-(3-methyl-4-hydroxyphenyl)cyclohexan und 2,2-Bis-(3-methyl-4-hydroxyphenyl)propan bestehenden Gruppe eingesetzt wird.

5. Verfahren nach Anspruch 1, bei dem zusätzlich ein tri- oder multifunktioneller Verzweiger eingesetzt wird.

6. Verfahren nach Anspruch 2, **dadurch gekennzeichnet, dass** die Zugabe der Säure erst nach einer Vorkondensation des Diarylcarbonats und der Dihydroxyverbindung erfolgt.

7. Verfahren nach Anspruch 1, bei dem in der zweiten Stufe zusätzlich eine Dihydroxyverbindung und Phosgen zugegeben werden.

## Claims

1. Process for the production of polyester carbonates, **characterised in that** in a first stage oligomers are produced by a melt transesterification process, which are then condensed in a second stage by a phase interface process to form the polymeric polyester carbonate.

2. Process according to claim 1, in which in the first stage
• at least one dicarboxylic acid of the formula (I)
HOOC-T-COOH (I)
in which T denotes a branched or linear, saturated or unsaturated alkyl, arylalkyl or cycloalkyl radical of 4-40 carbon atoms,
• at least one dihydroxy compound of the formula (II)
HO-Ar-OH (II)
in which Ar is an aromatic radical with 6 to 30 C atoms, preferably with 6 to 25 C atoms, which may contain one or more aromatic nuclei, may be substituted, and may contain aliphatic or cycloaliphatic radicals or alkylaryl radicals or heteroatoms as bridge members,
• at least one diaryl carbonate of the formula (III) 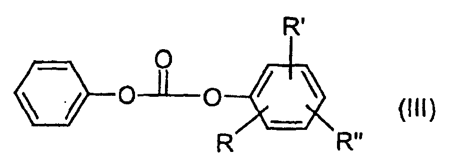 and/or formula (IV) 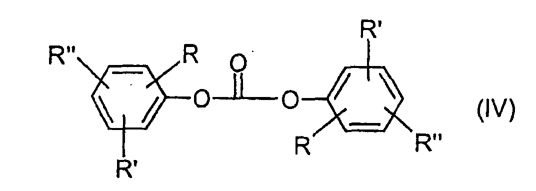 in which R, R' and R" independently of one another may denote H, optionally branched C₁-C₃₄-alkyl/cycloalkyl, C₇-C₃₄-alkaryl or C₆-C₃₄-aryl, for example diphenyl carbonate,
• as well as optionally a melt transesterification catalyst are used for the oligomer synthesis.

3. Process according to claim 2, in which at least one of the dicarboxylic acids from the group comprising adipic acid, 1,2-cyclohexanedicarboxylic acids, 1,3-cyclohexanedicarboxylic acids, 1,4-cyclohexanedicarboxylic acids, sebacic acid, α,ω-dodecanedioic acid, phthalic acid, isophthalic acid, terephthalic acid, hydrogenated dimeric fatty acids, is employed.

4. Process according to claim 2, in which at least one dihydroxy compound from the group comprising resorcinol, bis-(4-hydroxyphenyl)-1-(1-naphthyl)ethane, bis-(4-hydroxyphenyl)-1-(2-naphthyl)ethane, 2,2-bis-(4-hydroxyphenyl)-propane, α,α'-bis-(4-hydroxyphenyl)-p-diisopropylbenzene, α,α'-bis-(4-hydroxyphenyl)-m-diisopropylbenzene, 1,1-bis-(4-hydroxyphenyl)cyclohexane, 4,4'-dihydroxydiphenyl, bis-(4-hydroxyphenyl)-3,3,5-trimethyl-cyclohexane, bis-(4-hydroxyphenyl)diphenylmethane, dihydroxy-3-(4-hydroxyphenyl)-1,1,3-trimethyl-1*H*-inden-5-ol, dihydroxy-1-(4-hydroxy-phenyl)-1,3,3-trimethyl-1*H*-inden-5-ol, 2,2',3,3'-tetrahydro-3,3,3',3'-tetra-methyl-1,1'-spirobi[1*H*-inden]-5,5'-diol, 1,1-bis-(3-methyl-4-hydroxyphenyl)-cyclohexane and 2,2-bis-(3-methyl-4-hydroxyphenyl)propane is used.

5. Process according to claim 1, in which a trifunctional or polyfunctional branching agent is additionally employed.

6. Process according to claim 2, **characterised in that** the addition of the acid takes place only after a precondensation of the diaryl carbonate and the dihydroxy compound.

7. Process according to claim 1, in which in the second stage a dihydroxy compound and phosgene are additionally added.

## Revendications

1. Procédé pour la préparation de polyestercarbonates, **caractérisé en ce que** dans une première étape des oligomères sont préparés selon un procédé de transestérification par fusion, lesquels sont ensuite condensés dans une deuxième étape selon un procédé interfacial en des polyestercarbonates polymères.

2. Procédé selon la revendication 1, dans lequel on utilise dans la première étape
- au moins un acide dicarboxylique de formule (I)
HOOC-T-COOH (I),
dans laquelle T représente un élément alkyle, arylalkyle ou cycloalkyle de 4 à 40 atomes de carbone ramifié ou linéaire, saturé ou insaturé,
- au moins un composé dihydroxylé de formule (II)
HO-Ar-OH (II)
dans laquelle Ar est un reste aromatique avec 6 à 30 atomes de carbone, de préférence 6 à 25 atomes de carbone, qui peut contenir un ou plusieurs noyau(x) aromatique(s), être substitué et contenir des restes aliphatiques ou cycloaliphatiques ou des alkylaryles ou des hétéroatomes en servant d'élément de pont,
- au moins un carbonate diarylique de formule (III) et/ou (IV) 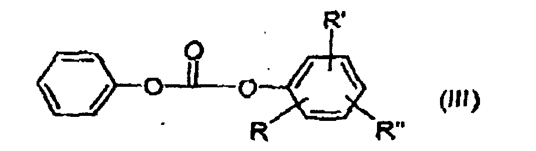 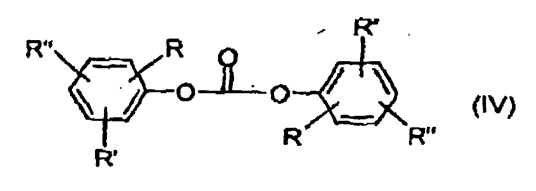 dans lesquelles R, R' et R" peuvent représenter indépendamment les uns des autres un atome d'hydrogène, le cas échéant un groupe alkyle en C₁-C₃₄/cycloalkyle, un groupe alkaryle en C₇-C₃₄ ou un groupe aryle en C₆-C₃₄ ramifiés,
- ainsi qu'éventuellement un catalyseur de transestérification par fusion pour la synthèse d'oligomères.

3. Procédé selon la revendication 2, dans lequel au moins un des acides dicarboxyliques choisis parmi le groupe composé de l'acide adipique, des acides 1,2-cyclohexanedicarboxyliques, des acides 1,3-cyclohexanedicarboxyliques, des acides 1,4-cyclohexanedicarboxyliques, de l'acide sébacique, du diacide α-ou ω-dodécanoïque, de l'acide phtalique, de l'acide isophtalique, de l'acide térephtalique, des acides gras de dimère hydrogénés est utilisé.

4. Procédé selon la revendication 2, dans lequel au moins un composé dihydroxylé choisi parmi le groupe composé de la résorcine, du bis-(4-hydroxyphényl)-1-(1-naphtyl)éthane, du bis-(4-hydroxyphényl)-1-(2-naphtyl)éthane, du 2,2-bis-(4-hydroxyphényl)propane, de l'α,α-bis-(4-hydroxyphényl)-p-diisopropylbenzène, de l'α,α-bis-(4-hydroxyphényl)-m-diisopropylbenzène, du 1,1-bis-(4-hydroxyphényl)cyclohexane, du 4,4'-dihydroxydiphényle, du bis-(4-hydroxyphényl)-3,3,5-triméthylcyclohexane, du bis-(4-hydroxyphényl)diphénylméthane, du dihydroxy-3-(4-hydroxyphényl)-1,1,3-triméthyl-1*H*-indèn-5-ol, du dihydroxy-1-(4-hydroxyphényl)-1,3,3-triméthyl-1*H*-indèn-5-ol, du 2,2',3,3'-tétrahydro-3,3,3',3'-tétraméthyl-1,1'-spirobi[1*H* indène]-5,5'-diol, du 1,1-bis-(3-méthyl-4-hydroxyphényl)cyclohexane et du 2,2-bis-(3-méthyl-4-hydroxyphényl)propane est utilisé.

5. Procédé selon la revendication 1, dans lequel on utilise en outre un ramificateur tri- ou multifonctionnel.

6. Procédé selon la revendication 2, **caractérisé en ce que** l'ajout de l'acide a lieu seulement après une précondensation du carbonate diarylique et du composé dihydroxylé.

7. Procédé selon la revendication 1, dans lequel dans la deuxième étape on ajoute en outre un composé dihydroxylé et du phosgène.
